# FASCICULE DE BREVET EUROPEEN

(11) **EP 0 991 163 B1**
(45) Date de publication et mention de la délivrance du brevet: **24.05.2006**
(21) Numéro de dépôt: 99119216.2
(22) Date de dépôt: 25.09.1999
(51) Int. Cl.: H02K 1/22, H02K 21/04

(54) **Alternateur de véhicule automobile à aimants permanents**
Wechselstromgenerator für Kraftfahrzeuge mit Dauermagneten
Alternator for vehicle with permanent magnets

(30) Priorité: 02.10.1998 FR 9812360
(43) Date de publication de la demande: 05.04.2000
(73) Titulaire: VALEO EQUIPEMENTS ELECTRIQUES MOTEUR, 94017 Creteil (FR)
(72) Inventeur: Armiroli, Paul, 94440 Marolles en Brie (FR); Badey, Jean-Philippe, 62630 Etaples (FR); Gravat, Denis, 77320 La Ferté-Gaucher (FR)

(56) Documents cités:
- EP-A- 0 718 959
- EP-A- 0 762 617
- US-A- 3 427 486
- US-A- 5 734 216
- "ALTERNATING CURRENT GENERATOR WITH HIGH SPEED IMPROVEMENT" RESEARCH DISCLOSURE, no. 397, 1 mai 1997 (1997-05-01), page 328 XP000726444 ISSN: 0374-4353
- DATABASE WPI Section Ch, Week 9001 Derwent Publications Ltd., London, GB; Class A21, AN 90-003030 XP002109109 & JP 01 284573 A (EPSON CORP), 15 novembre 1989 (1989-11-15)

## Description

L'invention concerne les alternateurs de véhicules, notamment automobiles.

On connaît d'après le document EP-0 762 617 A1 et le document "ALTERNATING CURRENT GENERATOR WITH HIGH SPEED IMPROVEMENT", RESEARCH DISCLOSURE, no. 397, 1 mai 1997, page 328, XP000726444, ISSN : 0374-4353, conforme au préambule de la revendication 1, un alternateur pour véhicule comprenant des roues polaires présentant des pôles en forme de griffes entrelacés, et des aimants permanents interpolaires interposés entre les griffes adjacentes. Les aimants réduisent les fuites de flux magnétique et contribuent à renforcer le flux magnétique. Lorsque les tolérances de fabrication des pièces sont relativement larges pour réduire les coûts, il arrive qu'un aimant interpolaire se casse sous l'effet des efforts centrifuges et des échauffements considérables engendrés par la rotation du rotor à vitesse élevée (ouverture des cornes polaires).

Un but de l'invention est de fournir un alternateur permettant la fixation des aimants et réduisant, entre autre le risque de casser l'aimant, ceci sans nécessiter des tolérances de.fabrication très fines.

Ce problème est résolu par la partie caractérisante de la revendication 1.

Ainsi, de par sa souplesse, la couche de matériau rattrape les jeux dus aux tolérances de fabrication et absorbe les déformations des pièces dues aux échauffements et aux efforts générés par les vitesses élevées. Cela réduit le risque de casser l'aimant. En effet, l'aimant étant lié à une corne polaire, le déplacement relatif de chaque corne polaire, donc de l'aimant, est absorbé par le matériau souple.

Avantageusement, le matériau comprend du fer.

Ainsi, on favorise la continuité du champ magnétique à travers la couche de matériau souple.

Avantageusement, l' aimant s'étend entre des faces latérales des pôles associés, la couche de matériau souple s'étendant suivant un plan parallèle aux faces latérales des pôles.

Avantageusement, la couche de matériau souple s'étend à mi-distance des pôles associés.

Avantageusement, la couche de matériau souple s'étend suivant un plan médian de l'aimant perpendiculaire à une direction de polarisation de l'aimant.

Avantageusement, les pôles présentent des faces latérales où sont ménagées des rainures dans lesquelles est reçu l'aimant.

Avantageusement, les rainures ont un profil transversal en « U ».

Ainsi, un aimant à profil rectangulaire peut être reçu entre les pôles.

Avantageusement, les rainures ont un profil transversal en « V », une branche du « V » étant généralement parallèle à une face circonférentielle du pôle.

Ainsi, un aimant à profil trapézoïdal peut être reçu entre les pôles.

Avantageusement, les pôles ont des faces circonférentielles interne et externe et des faces latérales chacune ininterrompues de l'une à l'autre des faces circonférentielles et inclinées en direction d'un arbre de l'alternateur.

Ainsi, ces faces délimitent un logement trapézoïdal dans lequel peut être reçu un aimant à profil trapézoïdal qui peut être disposé très près de l'entrefer, compte tenu de l'absence de retour sous l'aimant près de l'entrefer.

Avantageusement, l'aimant a un profil rectangulaire perpendiculairement à une direction longitudinale de l'aimant.

Avantageusement, l'aimant est collé à au moins un des pôles au moyen d'une colle identique au matériau.

Avantageusement, l'alternateur comprend plusieurs aimants, au moins deux des aimants, voire une majorité, de préférence une totalité, comprenant chacun deux parties disjointes.

Avantageusement, l'aimant a un profil trapézoïdal perpendiculairement à une direction longitudinale de l'aimant.

D'autres caractéristiques et avantages de l'invention apparaîtront encore dans la description suivante d'un mode préféré de réalisation et de variantes, donnés à titre d'exemples non limitatifs. Aux dessins annexés :
- la figure 1 est une vue partielle latérale d'un rotor d'alternateur selon l'invention ;
- la figure 2 est une vue partielle en coupe selon le plan II-II du rotor de la figure 1 ; et
- les figures 3, 4 et 5 sont des vues analogues à la figure 2 illustrant des variantes de réalisation.

Dans le présent mode de réalisation, l'alternateur électrique pour véhicule automobile selon l'invention est destiné à être refroidi par eau en étant intégré dans la boucle du circuit de refroidissement du véhicule de façon connue en soi. L'alternateur peut être intégré à cette fin par exemple en série ou en parallèle avec le radiateur de chauffage de l'habitacle. Alternativement, il peut s'agir d'un alternateur à ventilation interne.

L'alternateur comporte un stator et un rotor 2 muni d'un arbre d'axe 4, qui sont d'un type classique connu en soi, par exemple du document EP-0 762 617, sauf en ce qui concerne les pôles et les aimants interpolaires. Le rotor comporte deux pièces ou roues polaires 6 comprenant chacune un plateau 8 en forme de disque monté coaxialement sur l'arbre. Les deux plateaux 8 s'étendent en coïncidence et parallèlement l'un à l'autre.

Chaque pièce polaire 6 comporte des pôles 10 en forme de griffe, généralement plats et triangulaires, s'étendant à partir du plateau 8 en direction de l'autre plateau. Les pôles des roues polaires sont entrelacés mutuellement de sorte que la pointe de chaque pôle 10 s'étend très près du plateau 8 de l'autre pièce polaire. Une telle disposition est connue en soi.

Les deux roues polaires 6 sont associées aux pôles respectifs Nord et Sud. Chaque pôle 10 présente deux faces circonférentielles respectivement externe convexe 12 et interne concave 14, et deux faces latérales planes 16 formant deux des côtés du triangle et contiguës aux faces circonférentielles. Les faces latérales 16 des pôles 10 s'étendent en regard et à distance les unes des autres.

Dans le présent mode de réalisation, chaque face latérale 16 présente une rainure 18 ou gorge à profil en « U », la rainure ayant un axe s'étendant suivant une direction longitudinale de la face latérale 16. La gorge 18 présente un fond plat et deux flancs perpendiculaires à celui-ci.

Le rotor comporte des aimants permanents 20 ayant ici une forme générale en parallélépipède rectangle et notamment un profil rectangulaire perpendiculairement à une direction longitudinale de l'aimant. Chaque aimant 20 est reçu entre les faces latérales 16 de deux pôles 10 respectifs avec ses faces latérales 22 dans les gorges 18 avec interposition éventuelle d'une couche de colle au fond des gorges. Chaque aimant 20 est polarisé Nord-Sud suivant une direction s'étendant de l'une à l'autre de ses faces latérales.

Chaque aimant 20 se compose de deux parties d'aimant 24 qui, en l'espèce, sont identiques entre elles dans leur forme et leurs dimensions et ont chacune une forme de parallélépipède rectangle. Ces deux parties 24 sont disjointes l'une de l'autre et directement fixées l'une à l'autre par une couche de colle 26 constituant un matériau plus souple que celui des aimants. Cette couche est ici plane et s'étend dans un plan longitudinal médian de l'aimant 24 à mi-distance des faces latérales 16 des pôles 10 et parallèlement à celles-ci. La colle souple pourra être une colle siliconée connue en soi. Elle comprendra avantageusement des particules de fer pour assurer une bonne continuité du champ magnétique à travers la couche de colle 26. Les parties d'aimant 24 pourront être des ferrites ou des terres rares. La couche 26 assure au moins partiellement le rattrapage des jeux dûs aux tolérances de fabrication, et absorbe les déformations dues aux efforts (force centrifuge) et aux échauffements apparaissant lorsque le rotor tourne à des vitesses élevées.

L'épaisseur de la couche de colle 26 sera négligeable par rapport aux dimensions de l'aimant 20 et a été exagérée sur les dessins pour la clarté de la représentation. Cette colle 26 sera avantageusement identique à celle interposée entre l'aimant et les pôles au fond des gorges.

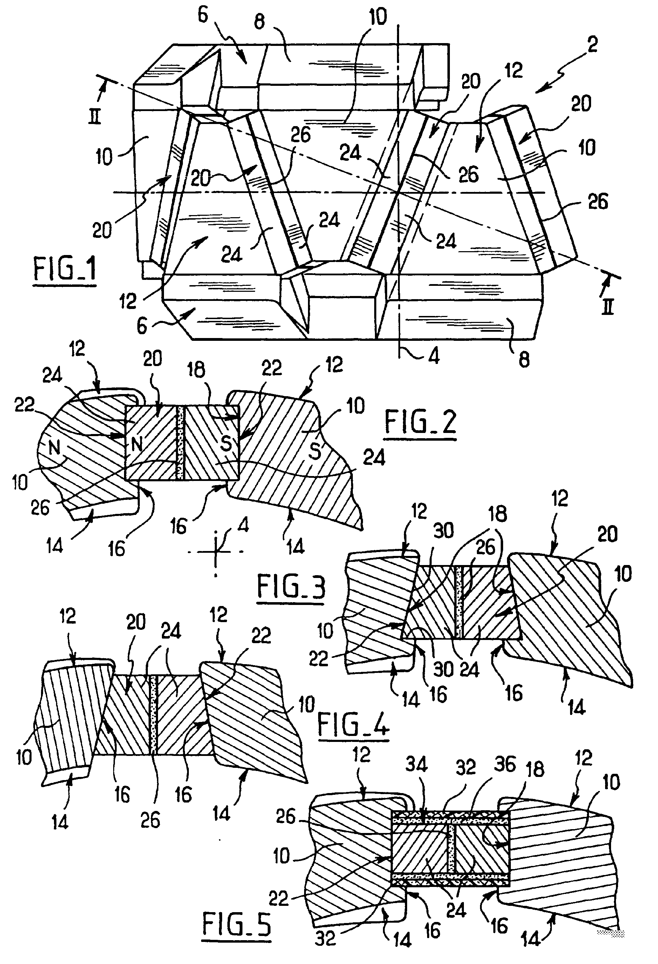

Dans la variante de la figure 3, la rainure 18 a un profil en « V » à deux branches 30 inclinées l'une par rapport à l'autre. L'une des branches 30 est généralement parallèle aux faces circonférentielles 12,14 et perpendiculaire à la face latérale 16, alors que l'autre branche 30 est inclinée par rapport à celle-ci. La branche inclinée est ici celle des deux branches qui est la plus éloignée du rotor. Chaque aimant 20 a cette fois un profil de forme trapézoïdale. Le côté du trapèze le plus large parmi ses deux côtés qui sont parallèles entre eux, vient en contact avec le flanc non incliné 30 de la rainure 18, et est ainsi le côté de l'aimant le plus proche de l'axe 4. La couche de colle plane médiane 26 est perpendiculaire aux côtés parallèles du trapèze.

Dans la variante de la figure 4, les faces latérales 16 des pôles sont cette fois dépourvues de gorge et sont chacune ininterrompues de l'une à l'autre des faces circonférentielles 12,14. Elles sont inclinées en direction de l'arbre et ainsi inclinées l'une par rapport à l'autre. Les aimants 20 sont identiques à ceux de la figure 3. Les côtés non mutuellement parallèles du trapèze viennent en contact surfacique avec les faces latérales respectives 16 des pôles avec interposition d'une couche de colle non illustrée.

La variante de la figure 5 est proche de celle de la figure 2. Le rotor comporte au moins une plaquette ou laminette 32 de forme plate rectangulaire réalisée en un matériau plus souple que l'aimant et comprenant par exemple des fibres de verre noyées dans une résine plastique pré-imprégnée. Cette plaquette 32 est fixée à la face circonférentielle externe 34 de l'aimant dont elle reproduit les dimensions et la forme, avec interposition d'une couche de colle souple 36. Elle est elle aussi logée dans les rainures 18 de sorte qu'elle est interposée entre l'aimant 20 et chacune des rainures.

Une plaquette analogue 32 peut être prévue alternativement ou en complément contre la face circonférentielle interne de l'aimant.

On pourra prévoir une laminette dans la variante de la figure 3.

Dans la variante de la figure 5 ou celle de la figure 3, la ou les laminettes absorbent les déformations et rattrapent les jeux dans d'autres directions que la direction de rattrapage associée à la couche de colle 26 reliant les parties d'aimant 24.

Pour le montage, on peut fixer à l'aimant 20 la ou les laminettes 32, puis loger l'ensemble dans les rainures 18 entre les pôles 10.

Au contraire, on peut alternativement loger les aimants 20 entre les pôles puis introduire la ou les laminettes 32 dans les rainures et les coller en même temps à l'aimant.

La couche de colle 26 reliant les deux parties d'aimant 24 pourra s'étendre dans un plan localement parallèle aux faces circonférentielles 13,14 des pôles et perpendiculaire aux faces latérales 16.

## Revendications

1. Alternateur pour véhicule, comportant deux roues polaires (6) comprenant des pôles (10) en forme de griffes entrelacés et au moins un aimant (20) interposé entre les pôles, l'aimant (20) comprenant deux parties disjointes, chaque partie étant fixée à seulement un des deux pôles entre lesquels l'aimant (20) est interposé, **caractérisé en ce que** les parties disjointes sont fixées l'une à l'autre par une couche (26) de matériau plus souple que l'aimant.

2. Alternateur selon la revendication 1, **caractérisé en ce que** le matériau (26) comprend du fer.

3. Alternateur selon l'une quelconque des revendications 1 ou 2, **caractérisé en ce que** l'aimant (20) s'étend entre des faces latérales (16) des pôles associés, la couche de matériau (26) s'étendant suivant un plan parallèle aux faces latérales des pôles.

4. Alternateur selon l'une quelconque des revendications 1 à 3, **caractérisé en ce que** la couche de matériau (26) s'étend à mi-distance des pôles associés (10).

5. Alternateur selon l'une quelconque des revendications 1 à 4, **caractérisé en ce que** la couche de matériau (26) s'étend suivant un plan médian de l'aimant (20), perpendiculaire à une direction de polarisation de l'aimant.

6. Alternateur selon l'une quelconque des revendications 1 à 5, **caractérisé en ce que** les pôles (10) présentent des faces latérales (16) où sont ménagées des rainures (18) dans lesquelles est reçu l'aimant (20).

7. Alternateur selon la revendication 6, **caractérisé en ce que** les rainures (18) ont un profil transversal en « U ».

8. Alternateur selon la revendication 6, est **caractérisé en ce que** les rainures (18) ont un profil transversal en « V », une branche (30) du « V » étant généralement parallèle à une face circonférentielle (12,14) du pôle (10).

9. Alternateur selon l'une quelconque des revendications 1 à 8, **caractérisé en ce que** l'aimant (20) a un profil rectangulaire perpendiculairement à une direction longitudinale de l'aimant.

10. Alternateur selon l'une quelconque des revendications 1 à 8 **caractérisé en ce que** l'aimant (20) a un profil trapézoïdal perpendiculairement à une direction longitudinale de l'aimant.

11. Alternateur selon l'une des revendications 1 à 10, **caractérisé en ce que** l'aimant (20) est collé à au moins l'un des pôles (10) au moyen d'une colle identique au matériau (26).

12. Alternateur selon l'une des revendications 1 à 11, **caractérisé en ce qu'**il comprend plusieurs aimants (20), au moins deux des aimants comprenant chacun deux parties disjointes.

13. Alternateur selon la revendication 12, **caractérisé en ce qu'**une majorité, de préférence une totalité des aimants (20) comprend chacun deux parties disjointes

## Claims

1. Alternator for a vehicle, comprising two pole wheels (6) comprising poles (10) in the form of interleaved claws and at least one magnet (20) interposed between the poles, the magnet (20) comprising two separate parts, each part being fixed to only one of the two poles between which the magnet (20) is interposed, **characterised in that** the separate parts are fixed to each other by a layer (26) of material more flexible than the magnet.

2. Alternator according to claim 1, **characterised in that** the material (26) comprises iron.

3. Alternator according to either one of claims 1 or 2, **characterised in that** the magnet (20) extends between lateral faces (16) of the associated poles, the layer of material (26) extending along a plane parallel to the lateral faces of the poles.

4. Alternator according to any one of claims 1 to 3, **characterised in that** the layer of material (26) extends halfway between the associated poles (10).

5. Alternator according to any one of claims 1 to 4, **characterised in that** the layer of material (26) extends along a mid-plane of the magnet (20), perpendicular to a direction of biasing of the magnet.

6. Alternator according to any one of claims 1 to 5, **characterised in that** the poles (10) have lateral faces (16) where there are provided grooves (18) in which the magnet (20) is received.

7. Alternator according to claim 6, **characterised in that** the grooves (18) have a U-shaped transverse profile.

8. Alternator according to claim 6, **characterised in that** the grooves (18) have a V-shaped transverse profile, one leg (30) of the V being generally parallel to a circumferential face (12, 14) of the pole (10).

9. Alternator according to any one of claims 1 to 8, **characterised in that** the magnet (20) has a rectangular profile perpendicular to a longitudinal direction of the magnet.

10. Alternator according to any one of claims 1 to 8, **characterised in that** the magnet (20) has a trapezoidal profile perpendicular to a longitudinal direction of the magnet.

11. Alternator according to any one of claims 1 to 10, **characterised in that** the magnet (20) is adhesively bonded to at least one of the poles (10) by means of an adhesive identical to the material (26).

12. Alternator according to any one of claims 1 to 11, **characterised in that** it comprises several magnets (20) at least two of the magnets each comprising two separate parts.

13. Alternator according to claim 12, **characterised in that** a majority of and preferably all the magnets (20) each comprise two separate parts.

## Patentansprüche

1. Wechselstromgenerator für Fahrzeuge, umfassend zwei Polräder (6), die Pole (10) in Form von ineinander verzahnten Klauen und wenigstens einen zwischen den Polen eingefügten Magneten (20) enthalten, wobei der Magnet (20) zwei getrennte Teile umfasst, wobei jeder Teil nur an einem der beiden Pole befestigt ist, zwischen denen der Magnet (20) eingefügt ist, **dadurch gekennzeichnet, dass** die getrennten Teile aneinander durch eine Schicht (26) aus einem Material befestigt sind, das biegsamer als der Magnet ist.

2. Wechselstromgenerator nach Anspruch 1, **dadurch gekennzeichnet, dass** das Material (26) Eisen enthält.

3. Wechselstromgenerator nach einem der Ansprüche 1 oder 2, **dadurch gekennzeichnet, dass** sich der Magnet (20) zwischen den Seitenflächen (16) der zugehörigen Pole erstreckt, wobei sich die Materialschicht (26) entlang einer zu den Seitenflächen der Pole parallelen Ebene erstreckt.

4. Wechselstromgenerator nach einem der Ansprüche 1 bis 3, **dadurch gekennzeichnet, dass** sich die Materialschicht (26) in halbem Abstand von den zugehörigen Polen (10) erstreckt.

5. Wechselstromgenerator nach einem der Ansprüche 1 bis 4, **dadurch gekennzeichnet, dass** sich die biegsame Materialschicht entlang einer zu einer Polungsrichtung des Magneten senkrechten Mittelebene des Magneten erstreckt.

6. Wechselstromgenerator nach einem der Ansprüche 1 bis 5, **dadurch gekennzeichnet, dass** die Pole (10) Seitenflächen (16) aufweisen, in die Nuten (18) eingearbeitet sind, in denen der Magnet (20) aufgenommen ist.

7. Wechselstromgenerator nach Anspruch 6, **dadurch gekennzeichnet, dass** die Nuten (18) ein "U"-förmiges Querprofil haben.

8. Wechselstromgenerator nach Anspruch 6, **dadurch gekennzeichnet, dass** die Nuten (18) ein "V"-förmiges Querprofil haben, wobei ein Schenkel des "V" insgesamt parallel zu einer Umfangsfläche (12, 14) des Pols (10) verläuft.

9. Wechselstromgenerator nach einem der Ansprüche 1 bis 8, **dadurch gekennzeichnet, dass** der Magnet (20) ein rechteckiges Profil senkrecht zu einer Längsrichtung des Magneten hat.

10. Wechselstromgenerator nach einem der Ansprüche 1 bis 8, **dadurch gekennzeichnet, dass** der Magnet (20) ein trapezförmiges Profil senkrecht zu einer Längsrichtung des Magneten hat.

11. Wechselstromgenerator nach einem der Ansprüche 1 bis 10, **dadurch gekennzeichnet, dass** der Magnet (20) wenigstens an einem der Pole (10) mittels eines mit dem Material (26) identischen Klebstoffs verklebt ist.

12. Wechselstromgenerator nach einem der Ansprüche 1 bis 11, **dadurch gekennzeichnet, dass** er mehrere Magnete (20) umfasst, wobei wenigstens zwei der Magnete jeweils zwei getrennte Teile umfassen.

13. Wechselstromgenerator nach Anspruch 12, **dadurch gekennzeichnet, dass** eine Mehrzahl, vorzugsweise eine Gesamtheit der Magnete (20) jeweils zwei getrennte Teile umfasst.
